# EUROPEAN PATENT APPLICATION

(11) **EP 0 823 325 A2**
(43) Date of publication of application: **11.02.1998**
(21) Application number: 97113415.0
(22) Date of filing: 04.08.1997
(51) Int. Cl.: B32B 15/08, B32B 27/36

(54) **Polyester-laminated metal plate, and can ends and can bodies molded therefrom**

(30) Priority: 06.08.1996 JP 207016/96; 30.09.1996 JP 278684/96
(71) Applicant: Diafoil Hoechst Co., Ltd., Tokyo (JP)
(72) Inventor: Tate, Masashi, c/o Diafoil Hoechst Co. Ltd., Sakata-gun, Shiga-ken (JP)
(74) Representative: TER MEER STEINMEISTER & PARTNER GbR

(57) **Abstract**

The present invention relates to a polyester-laminated metal plate comprising a metal plate, a polyester layer (A) which is laminated on one side of the said metal plate and has a haze of not more than 4%, and a polyester layer (B) which is laminated on the other side of the said metal plate.

## Description

### BACKGROUND OF THE INVENTION

The present invention relates to a polyester-laminated metal plate, and can ends and can bodies molded therefrom. More particularly, present invention relates to a polyester-laminated metal plate for molding metal can ends and metal can bodies, which polyester-laminated metal plate can maintain high airtightness of the cans and is capable of providing an excellent design flexibility to the external surfaces of the metal cans.

For attaching a metal can end (including can cover and can lid) to the body portion of a can, the curl of the can end and the corresponding flange of the can body are bent and rolled in together and fastened, with an elastomeric sealing compound placed between the curl and the flange for securing airtightness. Usually, such a sealing compound is applied on the inside of the curl of the can end.

However, the coating step by the sealing compound is a rate-determining factor in the industrial production of cans, so that this coating step leads to a remarkable increase of production cost and also the finished can end, especially beverage can end, may give rise to the problems such as contamination of the can content with the surplus compound.

Recently, the metal cans laminating with a thermoplastic resin film, especially polyester film, have come to be used widely, most typically as beverage cans. In case of the conventional application to the inside of the metal cans, it was difficult to perfectly eliminate exposure of the ground metal due to pinholes. On the contrary, the polyester film laminating allows easy and perfect elimination of such metal exposure, making it possible to prevent degeneration of the can content as well as the can metal by their mutual interaction due to the contact with each other.

The polyester film which has widely been used for laminating on the metal surfaces was a white film containing titanium dioxide. This was for the reason that the polyester film laminating was purposed to conceal the color of the ground metal, especially steel, and to substitute for the base white print so as to allow varicolored printing on the external surface of a metal can.

However, in the case of the cans for containing beer or like beverage, in order to create a refreshing image, it has preferentially been practiced to make a print directly on the metal surface so as to make the best use of the white silver luster of the can metal itself, so that the ordinary polyester films, even those containing no pigment, let alone the said white film, could hardly be used for the said purpose because they adversely affect the color tone of the can metal.

As a result of the present inventor's earnest studies to solve the above problems, it has been found that it is possible to enhance the design flexibility of the external surface of a metal can by laminating a polyester film having a specific haze value on outer side of metal can and/or to obtain excellent airtightness of a can with no need of applying a sealing compound by forming a polyester layer having a specific elasticity on the inside surface of a metal can end. The present invention has been achieved on the basis of the above finding.

### SUMMARY OF THE INVENTION

An object of the present invention is to provide a polyester-laminated metal plate for producing a polyester-laminated metal can which has excellent preservativeness of the content material and fragrance thereof, and has excellent design quality by making use of the original metal luster of the can material.

Another object of the present invention is to provide a polyester-laminated metal plate for producing a polyester-laminated metal can which has excellent preservativeness of the content material and fragrance thereof, which has excellent design quality by making use of the original metal luster of the can material, and which is free of the problems such as increase of production cost and contamination of the content material caused by application of a sealing compound on the inside of the beverage can end.

Still another object of the present invention is to provide a metal can end produced from a polyester-laminated metal plate for producing a polyester-laminated metal can which has excellent preservativeness of the content material and has excellent design quality by making use of the original metal luster of the can material.

Yet another object of the present invention is to provide a metal can end produced from a polyester-laminated metal plate, for producing a polyester-laminated metal can which has excellent preservativeness of the content material, which has excellent design quality by making use of the original metal luster of the can material, and which is free of the problems such as increase of production cost and contamination of the content material caused by application of a sealing compound on the inside of the beverage can end.

A further object of the present invention is to provide a metal can produced from a polyester-laminated metal plate, which has excellent preservativeness of the content material and also which has excellent design quality by making use of the original metal luster of the can material.

It is also an object of the present invention is to provide a metal can produced from a polyester-laminated metal plate, which has excellent preservativeness of the content material, which has excellent design quality by making use of the original metal luster of the can material, and which is free of the problems such as increase of production cost and contamination of the content material caused by application of a sealing compound on the inside of the beverage can end.

To accomplish the above aims, in a first aspect of the present invention, there is provided a polyester-laminated metal plate comprising a metal plate, a polyester layer (A) which is laminated on one side of the said metal plate and which has a haze of not more than 4%, and a polyester layer (B) which is laminated on the other side of the said metal plate.

In a second aspect of the present invention, there is provided a polyester-laminated metal plate comprising a metal plate, a polyester layer (A) which is laminated on one side of the said metal plate and which has a haze of not more than 4%, and a polyester layer (B) which is laminated on the other side of the said metal plate and which has a density of 0.7 to 1.2 g/cm³.

In a third aspect of the present invention, there is provided a polyester-laminated metal can end comprising:
a metal plate;
a polyester layer (A) which is laminated on the outer side of the said can end and which has a haze of not more than 4%; and
a polyester layer (B) which is laminated on the inner side of the said can end.

In a fourth aspect of the present invention, there is provided a polyester-laminated metal can end comprising:
a metal plate;
a polyester layer (A) which is laminated on the outer side of the said can end and which has a haze of not more than 4%; and
a polyester layer (B) which is laminated on the inner side of the said can end and which has a density of 0.7 to 1.2 g/cm³ and forms.

In a fifth aspect of the present invention, there is provided a polyester-laminated metal can comprising:
a metal plate;
a polyester layer (A) which is laminated on the outer side of the said can and which has a haze of not more than 4%; and
a polyester layer (B) which is laminated on the inner side of the said can.

In a sixth aspect of the present invention, there is provided a polyester-laminated metal can comprising:
a metal plate;
a polyester layer (A) which is laminated on the outer side of the said can and which has a haze of not more than 4%; and
a polyester layer (B) which is laminated on the inner side of the said can and which has a density of 0.7 to 1.2 g/cm³.

In a seventh aspect of the present invention, there is provided a polyester-laminated metal plate, a polyester-laminated metal can end or can, in which the said polyester-laminated metal plate comprises a metal plate and a polyester layer (B) which is laminated on the said metal plate and which has a density of 0.7 to 1.2 g/cm³, and in which the said polyester-laminated metal can end or can is produced from the said polyester-laminated metal plate wherein the said polyester layer (B) is laminated on the inner side of the said can end or can.

### DETAILED DESCRIPTION OF THE INVENTION

The present invention is described in detail below. The body portion of the polyester-laminated can end and can (hereinafter referred to simply as can end and end, respectively) according to the present invention is made of a metal material. Usually aluminum or steel is used as the metal material, aluminum is preferable for its easy-to-open characteristics. The aluminum material usable in the present invention include, beside pure aluminum, the aluminum alloys containing small quantities of manganese, magnesium, iron, copper or the like. Also, the aluminum material having a multilayer laminated structure, for instance, comprising of an aluminum alloy layer and a pure aluminum layer, may be used.

The polyester film-laminated metal plate according to the present invention comprises a metal plate and polyester film layers laminated on both surfaces of the said metal plate. The polyester used in the present invention is the one obtainable by polycondensing a dicarboxylic acid such as terephthalic acid or isophthalic acid and a diol such as ethylene glycol, diethylene glycol or 1,4-butanediol. As the polyester, a polyester formed from polyethylene terephthalate, polyethylene naphthalate or a copolymer thereof, which is relatively inexpensive and advantageous in terms of food sanitation, is especially preferred.

Since the polyester film used in the present invention may be offered to laminating of the drawn and ironed (D/I) aluminum cans, it is preferable that the film can accommodate itself to a large deformation. Therefore, it is preferable to impart adhesiveness to the polyester film itself by copolymerizing the polyester, rather than by applying a thermosetting resin adhesive. If the exposing side of the polyester film laminated on the metal plate such as aluminum also has adhesiveness, the film may adhere to a metal-made operating unit in the can manufacturing process, causing a flaw to the laminating layer surface. Therefore, it is more preferable to use a laminated film as polyester layer (A) and/or polyester layer (B), which laminated film comprises polyester layer (a) having a high thermal adhesivility such as a low-crystalline polyester layer and polyester layer (b) having a low thermal adhesivility such as a high-crystalline polyester layer, polyester layer (b) being laminated on polyester layer (a) so as to form the exposing layer.

Polyethylene terephthalate can be exemplified as the polyesters with relatively low adhesiveness. A copolymer derivative of polyethylene terephthalate with reduced crystallinity is preferable for use as the adhesive polyester in the present invention. Relatively inexpensive diethylene glycol, isophthalic acid and the like are preferable for use as the industrially favorable copolymer component, but isophthalic acid is especially preferred because it suffers little change of glass transition temperature and also its behavior of deformation during the can manufacturing process is approximate to the lowly adhesive polyethylene terephthalate layer.

In the ester units constituting the adhesive polyester, the percentage of those containing in the copolymer component is preferably 10 to 50%, more preferably 18 to 30%, even more preferably 20 to 27%. When the percentage of the copolymer ester units is less than 10%, the adhesiveness may be unsatisfactory, and when the percentage is more than 50%, the favorable characteristics of polyethylene terephthalate for use as a can laminating material may disappear.

The "ester unit" referred to in the present invention means a repeating unit comprising one dicarboxylic acid and one diol are condensed.

The polyester film laminated metal plate according to the present invention has polyester films laminated on both surface of metal plate. It is required that the polyester layer (A) laminated on the outer side of the can has a haze of not more than 4%, preferably not more than 3%, more preferably not more than 2%. When the haze of the laminated polyester film on the outer side of the can is more than 4%, the metallic luster of the can metal may become dull.

As the polyester layer (B) laminated on the inner side of the can, known polyester film can be used. However, it is preferable to use the same polyester used in the polyester layer (A) as the polyester in the said polyester layer (B) because there is advantage that the laminating on the metal plate can be conducted by the same condition in both surfaces of the metal plate.

The polyester layers (A) and (B) in the present invention may contain inorganic or organic particles. The average particle size of these inorganic or organic particles is preferably 0.1 to 3 µm, and the content of the said particles is usually not more than 0.3 part by weight preferably 0.01 to 0.3 part by weight based on 100 parts by weight of the layer. However, blending of these particles in the polyester layer (A) should be controlled so that the haze of the polyester layer (A) will become not more than 4%.

Usually, by the addition of the said particles, the haze of the external surface laminating layer of the can may be controlled. The generation of haze is caused by projections on the film surface and voids around the particles. Therefore, by controlling the average particle size and the particle content, the haze of the polyester laminating layer may be controlled within the range of not more than 4%.

The polyester layer (B) formed on the inside of the can end and the inside of the can body in the present invention has a density falling in the range of preferably 0.7 to 1.2 g/cm³ for the following reason.

The density of the polyester layer (B) is associated with the volume of voids formed in the layer. Due to the presence of these voids, there arise in the polyester layer (B) a large elastic deformation, not a plastic deformation, on receiving a compressive force in the thickness direction, by which deformation airtightness of the can after seaming is maintained.

Therefore, when the density of the polyester layer (B) is more than 1.2 g/cm³, the elasticity of film may be unsatisfactory because of too small volume of voids. By arising no sufficient compression deformation in seaming, close packing between the curl of the can end and the flange of the can body may not be obtained, resulting in unsatisfactory airtightness. On the other hand, in case where the density of the polyester layer (B) is less than 0.7 g/cm³, the film strength may be unsatisfactory because of too much volume of voids. Consequently, the laminating layer may have a risk of breakage to cause surface defects of the can. Therefore, the preferred range of density of the polyester layer (B) is from 0.9 to 1.1 g/cm³.

In the above definition, the density of the polyester layer (B) laminated on the metal material constituting the beverage can end is the density of the polyester layer after lamination not polyester film before lamination because of the change of the density by the above press laminating process.

The method of forming voids in the polyester layer (B) is not specified in the present invention, but it is preferable to use a method in which a thermoplastic resin incompatible with the polyester is blended with the polyester, and the blended polyester film is drawn to form voids around the thermoplastic resin domain. Polypropylene, polystyrene, polymethylpentene and the like can be mentioned as the examples of the thermoplastic resins incompatible with the polyester usable in the present invention. Among these, polypropylene which is inexpensive and has an appropriate void forming ability is preferred. The amount of the said thermoplastic resins added is preferably not more than 25 parts by weight based on 100 parts by weight of the polyester.

For forming a laminating layer by laminating a polyester film to the can end metal, there can be employed, for example, a method of using an adhesive and a method of imparting adhesiveness to the polyester film. The latter method is preferred because in the case of the adhesive method, there is a possibility that the solvent which inevitably remains on the finished can may be eluted into the content therein.

The polyester-laminated metal plate of the present invention can be produced, for instance, in the following way. As the polyester, a mixture of non-copolymer (homopolymer) polyethylene terephthalate and polypropylene and a copolymer polyethylene terephthalate material are used.

First, the said materials are melt coextruded from the respective extruders, then quenched and biaxially stretched successively at a temperature above the glass transition point by using a roll stretcher and a tentering machine, followed by heat setting at a temperature which is higher than the polypropylene melting point and about 40 to 50°C lower than the melting point of the non-copolymer polyethylene terephthalate. In the above process, the voids formed around the polypropylene domain by stretching are further spread by the polypropylene melt flow to give a polyester film having a plurality of voids in one of the layers.

Then the said polyester film is thermal-laminated to a metal (such as aluminum) plate heated to 240°C by using the laminating rolls, with the copolymer polyethylene terephthalate layer of the laminated polyester film being contacted with the aluminum plate. If necessary, a heat treatment may be conducted so as to control the degree of crystallinity of the non-copolymeric polyester layer to around 8 to 10%. Thereafter, the film-laminated metal plate is quenched to a temperature below the glass transition point so that no spherulite will be formed in the copolymer polyester layer to obtain a polyester-laminated aluminum plate. This polyester-laminated aluminum plate can be molded into a laminated can end or a laminated can body by the same method as employed for the ordinary laminated plates except that no sealing compound laminating step is involved.

As explained above, it is possible according to the present invention to obtain a beverage can end with high airtightness by using the ordinary seaming techniques with no need of applying a sealing compound which has a possibility of causing contamination of the content in the can.

Further, by laminating a highly transparent polyester film on an aluminum plate for cans and molding this laminated aluminum plate into a metal can according to the method of the present invention, it is possible to obtain a metal can having an excellent external appearance by making use of the metallic luster of aluminum with no need of conducting painting on the metal surface. Thus, the present invention is of very high industrial value.

### EXAMPLES

The present invention is explained in more detail by the following examples, but it should be understood that the scope of the present invention is not limited by these examples. In the following Examples, all "parts" are by weight unless otherwise noted. The evaluation of haze of the polyester film laminating layer and its density were measured by the following methods.

### 〈Evaluation of haze〉

For each specimen of the polyester-laminated metal plate, the laminating layer on the side (the layer on the inner side of the can) opposite from the laminating layer (the layer on the outer side of the can) to be subjected to evaluation was scraped off by sand paper to expose the metal, and this metal plate was then immersed in 2N HCl to dissolve away the metal to obtain the objective laminating layer. The haze of this laminating layer having livid paraffin applied to its side laminated to the metal plate was measured by a spectroscopic haze meter NDH-20D mfd. by Nippon Denshoku Kogyo Co., Ltd., according to JIS-K6714. In case where the film to be evaluated had print, the haze of the plain portion carrying no color print was measured in the same way as described above.

### 〈Measurement of density〉

The paint or the polyester laminating layer on the external surface of a polyester film-laminated can end was scraped off by sand paper, then the can end was immersed in 5N hydrochloric acid to dissolve away aluminum while isolating the polyester film from the can end metal, and the density of the isolated polyester film was measured by a density-gradient tube.

### Preparation Example 1 (Preparation of polyester A)

Into a reactor, 100 parts of dimethyl terephthalate, 60 parts of ethylene glycol and 0.1 part of calcium acetate monohydrate were supplied to carry out an ester exchange reaction. The reaction was initiated at 170°C, and the reaction temperature was gradually elevated with evaporation of methanol till reaching 230°C in 4 hours, at which point the ester exchange reaction was substantially completed.

Then, an ethylene glycol slurry containing amorphous silica having an average agglomerate particle diameter of 1.3 µm and 0.04 part of phosphoric acid were added to the reaction product, followed by further addition of 0.04 part of antimony trioxide to carry out a polycondensation reaction. The temperature was elevated gradually while gradually reducing the pressure, reaching 280°C and 0.3 mmHg in 2 hours, and after passage of additional 2 hours thereafter, the reaction was terminated to obtain a polyester A containing 0.5 part of silica.

### Preparation Example 2 (Preparation of polyester B)

The same procedure as in Preparation Example 1 was conducted except that no amorphous silica was added to obtain a polyester B.

### Preparation Example 3 (Preparation of polyester C)

The same procedure as in Preparation Example 2 was conducted except that 75 parts of dimethyl terephthalate and 25 parts of dimethyl isophthalate were used in place of 100 parts of dimethyl terephthalate to obtain a polyester C.

### Preparation Example 4 (Preparation of polyester D)

The same procedure as in Preparation Example 1 was conducted except for a change of amount of the ethylene glycol slurry to obtain a polyester D containing 0.1 part of silica.

### Preparation Example 5 (Preparation of polyester E)

The same procedure as in Preparation Example 4 was conducted except that 75 parts of dimethyl terephthalate and 25 parts of dimethyl isophthalate were used in place of 100 parts of dimethyl terephthalate to obtain a polyester E.

### Example 1

A mixed polyester I consisting of one part of polyester A and 99 parts of polyester B, and polyester C were melted and coextruded from the respective extruders at a discharge rate (mixed polyester I : polyester C) of 10 : 2, and then quenched to a temperature below the glass transition point to obtain an amorphous sheet. This sheet was stretched 3 times in the machine direction at 80°C by a roll stretcher, further stretched 4 times in the transverse direction at 100°C by a tenter stretcher and heat set at 220°C in the width direction to obtain a 12 µm thick laminated polyester film.

This laminated polyester film was laminated to both sides of an aluminum plate induction-heated to 240°C, with the polyester C side of the film being attached to the metal surface, by using the laminating rolls, and then heat set at 260°C followed by quenching with a cold water bath to obtain a laminated aluminum plate. The haze of the laminating layer of this laminated aluminum plate was 1.5%.

This laminated aluminum plate was blanked into a circular shape and subjected to paneling, compound laminating, scouring and tabbing to make a laminated can end.

Also, the laminated aluminum plate blanked into a circular shape was subjected to drawing between a draw die and a punch to form a cup, then the wall thereof was reduced in thickness by wiping between a wiping ring and a punch, and the blank was further subjected to trimming, cleaning, printing, necking and flanging to obtain a laminated can body.

The aluminum cans constituted from the said end and can body had excellent external appearance with metal luster.

### Comparative Example 1

The procedure of Example 1 was followed except that polyester A was used in place of the mixed polyester I to obtain a polyester film-laminated aluminum plate. The haze of the laminating layer of this aluminum plate was not less than 10%. A can end and a can body were molded from the said polyester-laminated aluminum plate in the same way as in Example 3.

The aluminum can constituted from the obtained can end and can body had an external appearance with dull metal luster and a diminished impression of refreshing image.

### Comparative Example 2

The haze of the laminating layer (white polyester film base) on the outer side of the bottom portion of the marketed polyester-laminated cans was measured. The haze was higher than 10%. These polyester-laminated cans had not an appearance making use of can metal luster.

### Example 2

Polyester D, a mixed polyester II consisting of 85 parts of polyester D and 15 parts of polypropylene (Mitsubishi Poly-Pro FA3D produced by Mitsubishi Chemical Corporation), and polyester E were melted and coextruded from the respective extruders in such a manner as to constitute a three-layer (polyester D/mixed polyester II/polyester E) structure, followed by quenching to a temperature below the glass transition point to obtain a laminated sheet.

This laminated sheet was stretched 3 times in the machine direction at 80°C by a roll stretcher, further stretched 4 times in the transverse direction at 100°C by a tenter stretcher and then heat set at 220°C in the width direction to obtain a laminated polyester film having a 1 µm polyester D layer, a 17 µm mixed polyester II layer and a 2 µm polyester E layer. This laminated polyester film was laminated on both sides of an aluminum plate induction-heated to 240°C by using the laminating rolls to obtain a laminated aluminum plate. In this example, the polyester E layer side of the laminated polyester film was laminated to the aluminum plate.

The above laminated aluminum plate was blanked into a circular shape, followed by paneling, scouring and tabbing to produce a polyester-laminated beverage can end. The density of the polyester film laminating layer was 1,000 g/cm³. The haze of the laminating layer was 3.0%. In order to evaluation airtightness of the produced can end, it was fastened to a water-filled metal can body to constitute a metal can, and this metal can was kept immersed in a 120°C oil bath for one hour. There was observed neither efflux of water from the can nor influx of oil into the can.

### Example 3

A mixed polyester II consisting of 85 parts of polyester D and 15 parts of polypropylene (Mitsubishi Poly-Pro FA3D produced by Mitsubishi Chemical Corporation), and polyester E were melted and coextruded from the respective extruders so as to constitute a two-layer (mixed polyester II/polyester E) structure, followed by quenching to a temperature below the glass transition point to obtain a laminated sheet. This laminated sheet was treated in the same way as in Example 1 to obtain a polyester-laminated beverage can end. The laminated polyester film had a layer structure of a 17 µm mixed polyester II layer and a 3 µm polyester E layer, and the density of the polyester film laminating layer was 1.010 g/cm³. The haze of the laminating layer was 3.0%. In the same airtightness evaluation test as conducted in Example 1, there was observed neither efflux of water from the can nor influx of oil into the can.

### Comparative Example 3

A polyester-laminated can end was produced by the same procedure as in Example 2 except that the polyester D in the mixed polyester II to polypropene ratio was changed to 70 : 30 by parts. The laminated polyester film had a 1 µm polyester D layer/17 µm mixed polyester II layer/2 µm polyester E layer structure. In some specimens, the polyester laminating layer had many scratches and the aluminum base was exposed in the molding step. The density of the flaw-free polyester film laminating layer was 0.685 g/cm³.

### Comparative Example 4

A polyester-laminated beverage can end was produced by the same procedure as in Example 3 except that polyester D was used in place of the mixed polyester II. The laminated polyester film had a 17 µm polyester D layer/3 µm polyester E layer structure, and its density was 1.385 g/cm³. In the airtightness evaluation test conducted in the same way as in Example 2, efflux of water from the can or influx of oil into the can was observed at a rate of 2-3 to 1,000 specimens.

## Claims

1. A polyester-laminated metal plate comprising a metal plate, a polyester layer (A) which is laminated on one side of said metal plate and which has a haze of not more than 4%, and a polyester layer (B) which is laminated on the other side of said metal plate.

2. A polyester-laminated metal plate according to claim 1, wherein said polyester layer (A) has a haze of not more than 3%.

3. A polyester-laminated metal plate according to claim 1, wherein said metal plate is an aluminum plate.

4. A polyester-laminated metal plate according to claim 1, which said polyester layer (B) has a density of 0.7 to 1.2 g/cm³.

5. A polyester-laminated metal plate according to claim 4, wherein said polyester layer (B) contains a thermoplastic resin.

6. A polyester-laminated metal plate according to claim 5, wherein said thermoplastic resin is polypropylene, polystyrene or polymethylpentene.

7. A polyester-laminated metal plate according to claim 1, wherein at least one selected from the group consisting of said polyester layer (A) and polyester layer (B) comprises polyester layer (a) having a high thermal adhesivility and polyester layer (b) having a low thermal adhesivility, and polyester layer (b) is laminated on polyester layer (a) so as to form the exposing layer.

8. A polyester-laminated metal can end comprising:
a metal plate;
a polyester layer (A) which is laminated on the outer side of said can end and which has a haze of not more than 4%; and
a polyester layer (B) which is laminated on the inner side of said can end.

9. A polyester-laminated metal can end according to claim 8, wherein said polyester layer (A) has a haze of not more than 3%.

10. A polyester-laminated metal can end according to claim 8, wherein said metal plate is an aluminum.

11. A polyester-laminated metal can end according to claim 8, wherein said polyester layer (B) has a density of 0.7 to 1.2 g/cm³.

12. A polyester-laminated metal can end according to claim 11, wherein said polyester layer (B) contains a thermoplastic resin.

13. A polyester-laminated metal can end according to claim 12, wherein said thermoplastic resin is polypropylene, polystyrene or polymethylpentene.

14. A polyester-laminated metal can end according to claim 8, wherein at least one selected from the group consisting of said polyester layer (A) and polyester layer (B) comprises polyester layer (a) having a high thermal adhesivility and polyester layer (b) having a low thermal adhesivility, and polyester layer (b) is laminated on polyester layer (a) so as to form the exposing layer.

15. A polyester-laminated metal can comprising:
a metal plate;
a polyester layer (A) which is laminated on outer side of said can and which has a haze of not more than 4%; and
a polyester layer (B) which is laminated on the inner side of said can.

16. A polyester-laminated metal can according to claim 15, wherein said polyester layer (A) has a haze of not more than 3%.

17. A polyester-laminated metal can according to claim 15, wherein said metal plate is an aluminum plate.

18. A polyester-laminated metal can according to claim 15, wherein said polyester layer (B) has a density of 0.7 to 1.2 g/cm³.

19. A polyester-laminated metal can according to claim 18, wherein said polyester layer (A) contains a thermoplastic resin.

20. A polyester-laminated metal can according to claim 19, wherein said thermoplastic resin is polypropylene, polystyrene or polymethylpentene.

21. A polyester-laminated metal can according to claim 15, wherein at least one selected from the group consisting of said polyester layer (A) and polyester layer (B) comprises polyester layer (a) having a high thermal adhesivility and polyester layer (b) having a low thermal adhesivility, and polyester layer (b) is laminated on polyester layer (a) so as to form the exposing layer.
